# DEMANDE DE BREVET EUROPEEN

(11) **EP 3 159 813 A1**
(43) Date de publication de la demande: **26.04.2017**
(21) Numéro de dépôt: 16193102.7
(22) Date de dépôt: 10.10.2016
(51) Int. Cl.: G06F 17/30

(54) **PROCEDE DE GESTION DES RESSOURCES WEB D'UNE MACHINE**

(30) Priorité: 21.10.2015 FR 1560029
(71) Demandeur: Schneider Electric Industries SAS, 92500 Rueil-Malmaison (FR)
(72) Inventeur: CHICHE, Thierry, 38330 Saint Ismier (FR)
(74) Mandataire: Dufresne, Thierry

(57) **Abrégé**

Procédé de gestion des ressources WEB (R1, R2, R3) mémorisées dans un ou plusieurs serveurs (S1, S2, S3) informatiques associés à une machine (M1), caractérisé en ce qu'il comporte les étapes suivantes :
- mise à jour d'une liste desdits serveurs associés à ladite machine dans une base de données (DB2),
- indexation des ressources WEB mémorisées dans lesdits serveurs associés à la machine dans une base d'indexation (DB1),
- génération d'une requête pour accéder à des ressources WEB de ladite machine ou d'un composant de ladite machine (M1), ladite requête comportant au moins un élément d'identification de la machine (M1) ou dudit composant,
- émission de ladite requête à destination de ladite base d'indexation (DB1),
- sélection dans la base d'indexation (DB1) d'une ou plusieurs ressources WEB répondant à la requête émise.

## Description

### Domaine technique de l'invention

La présente invention se rapporte à un procédé pour accéder et visualiser des ressources WEB principalement mémorisées dans les équipements de contrôle-commande d'une machine.

### Etat de la technique

Pour fonctionner, une machine, employée par exemple dans un process industriel, comporte plusieurs équipements de contrôle-commande, comme par exemple un système d'interface Homme-Machine (IHM), un ou plusieurs variateurs de vitesse, un ou plusieurs automates programmables. De manière connue, ces équipements de contrôle-commande sont susceptibles d'embarquer des ressources WEB présentées sous différentes formes. Ces ressources WEB sont par exemple des manuels utilisateurs, des écrans de contrôle-commande, des affichages de données dynamiques décrivant l'état de la machine et de son procédé, des paramètres de configuration, du code de programmation contenant des variables mises à jour dynamiquement. Or il s'avère que ces ressources WEB ne sont souvent pas accessibles aisément par un utilisateur, ou même qu'elles sont non connues ou nouvelles.

Le but de l'invention est de proposer une solution qui permette à un utilisateur d'accéder facilement aux ressources WEB des équipements de contrôle-commande d'une machine. L'invention est mise en oeuvre en s'appuyant sur le besoin d'information de l'utilisateur et non sur une présentation à priori d'informations.

### Exposé de l'invention

Ce but est atteint par un procédé de gestion des ressources WEB mémorisées dans un ou plusieurs serveurs informatiques associés à une machine, comportant les étapes suivantes :
- mise à jour d'une liste desdits serveurs associés à ladite machine dans une base de données (DB2),
- indexation des ressources WEB mémorisées dans lesdits serveurs associés à la machine dans une base d'indexation (DB1),
- génération d'une requête pour accéder à des ressources WEB de ladite machine ou d'un composant de ladite machine, ladite requête comportant au moins un élément d'identification de la machine ou dudit composant,
- émission de ladite requête à destination d'une base d'indexation dans laquelle sont indexées lesdites ressources WEB stockées dans chaque serveur associé à la machine ou au composant ciblé,
- sélection dans la base d'indexation d'une ou plusieurs ressources WEB répondant à la requête émise.

Selon un mode de réalisation particulier de l'invention, l'élément d'identification est codé dans un code matriciel.

Selon un autre mode de réalisation particulier de l'invention, l'élément d'identification est une image capturée de la machine ou de son composant.

Selon une particularité de l'invention, la requête est générée automatiquement à partir de l'élément d'identification.

Selon une autre particularité de l'invention, la requête est complétée par une saisie d'informations.

L'invention concerne également un système de gestion des ressources WEB mémorisées dans un ou plusieurs serveurs informatiques associés à une machine, comportant
- un module de gestion des serveurs associés à chaque composant de la machine, ledit module étant agencé pour détecter de manière automatique l'ajout d'un serveur et pour détecter l'ajout et la mise à jour d'une ressource WEB associée à un composant de la machine,
- un module d'indexation des ressources WEB associées à chaque composant de la machine dans ladite base d'indexation,
- un module de recherche agencé pour :
   - générer une requête pour accéder à des ressources WEB de ladite machine ou d'un composant de ladite machine sur la base d'un élément d'identification de la machine ou d'un composant de celle-ci,
   - émettre ladite requête à destination d'une base d'indexation dans laquelle sont indexées lesdites ressources WEB stockées dans chaque serveur associé à la machine ou au composant ciblé,
   - sélectionner dans la base d'indexation d'une ou plusieurs ressources WEB répondant à la requête émise.

Selon un mode de réalisation particulier de l'invention, l'élément d'identification est codé dans un code matriciel.

Selon un autre mode de réalisation particulier de l'invention, l'élément d'identification est une image capturée de la machine ou de son composant.

Selon une particularité du système de l'invention, le module de recherche est agencé pour générer la requête de manière automatique à partir de l'élément d'identification.

Selon une autre particularité du système de l'invention, la requête est complétée par une saisie d'informations.

Selon une autre particularité du système de l'invention, il comporte un module de gestion des points d'intérêt en réalité augmentée sur une image de la machine ou d'un composant de la machine et agencée pour l'associer :
- soit à une adresse pointant sur une ou plusieurs ressources WEB identifiées à la suite d'une requête,
- soit à une requête de recherche formulée par l'utilisateur.

### Brève description des figures

D'autres caractéristiques et avantages vont apparaître dans la description détaillée qui suit faite en regard des dessins annexés dans lesquels :

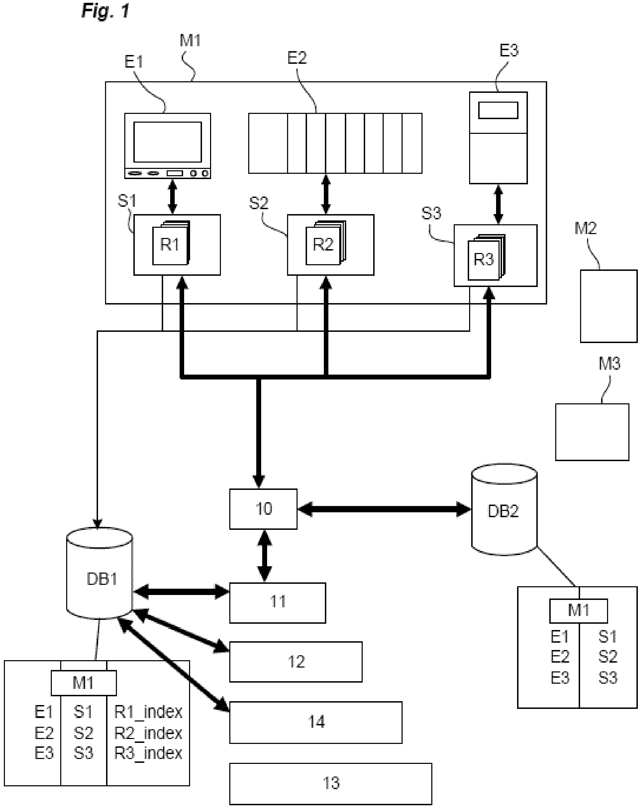

- la figure 1 représente l'architecture du système permettant de mettre en oeuvre le procédé de l'invention.

### Description détaillée d'au moins un mode de réalisation

La figure 1 illustre le principe de fonctionnement de l'invention. Sur cette figure, plusieurs machines M1, M2, M3 sont schématisées. Chaque machine comporte par exemple des composants, par exemple plusieurs équipements. Sur la figure 1, seuls les équipements de la machine M1 sont représentés. L'invention sera décrite en s'intéressant à la machine M1 mais il faut comprendre qu'elle peut s'appliquer de la même manière pour toute autre machine. La machine M1 est représentée avec plusieurs équipements de contrôle-commande, désignés E1, E2, E3. Les équipements de contrôle-commande de la machine M1 sont par exemple une interface Homme-Machine E1, un automate programmable E2 et un variateur de vitesse E3.

Plusieurs serveurs associés aux équipements de contrôle-commande de chaque machine stockent des ressources WEB R1, R2, R3 associées aux équipements. Par ressource WEB, on entend des pages au format html de type statique ou de type dynamique, c'est-à-dire incluant par exemple des variables, du code de programmation ou de configuration et des fonctionnalités de commande, des documents textuels, sonores ou vidéo ou autres (animation 3D), ainsi que des informations de géolocalisation concernant la page ou les différentes ressources web. Sur la figure 1, un serveur distinct S1, S2, S3 est associé respectivement à chaque équipement de contrôle-commande E1, E2, E3 de la machine M1. Le serveur S1 stocke donc des ressources WEB R1 concernant l'équipement de contrôle-commande E1, le serveur S2 stocke des ressources WEB R2 concernant l'équipement de contrôle-commande E2 et le serveur S3 stocke des ressources WEB R3 concernant l'équipement de contrôle-commande E3. Cependant, il faut comprendre qu'un même serveur pourrait être amené à stocker des ressources WEB associés à plusieurs équipements distincts. Chaque serveur S1, S2, S3 peut être embarqué directement dans l'équipement de contrôle-commande E1, E2, E3 auquel il est associé ou connecté à celui-ci à travers un réseau de communication adapté. Les ressources WEB peuvent être modifiées par un utilisateur autorisé ou de manière automatique, par exemple par un équipement, connecté en local ou à distance ou via des procédures automatiques de mises a jour a partir d'informations fournies par des serveurs tiers (mise a jour de documentation, de programmes, etc...).

Il faut également comprendre que deux machines qui ont une architecture et des équipements identiques peuvent très bien avoir des ressources WEB différentes, des ressources ayant pu être ajoutées, supprimées ou modifiées, que cela soit lors de la conception, de l'installation, de l'exploitation ou de la maintenance de la machine. Des intervenants multiples, fabricant de la machine, utilisateur, technicien de maintenance, peuvent en effet être amenés à intervenir sur les ressources enregistrées.

Le système de l'invention comporte plusieurs modules logiciels destinés à gérer le recensement et l'accès aux ressources WEB R1, R2, R3 mémorisées pour chaque équipement de contrôle-commande E1, E2, E3 de la machine M1.

Ces modules sont exécutés en tâche de fond en cas de connexion permanente avec les serveurs stockant les ressources web ou lancés automatiquement en cas de connexion temporaire avec ces serveurs.

Préférentiellement, ils sont localisés et exécutés sur un ou plusieurs des serveurs S1, S2, S3 associés aux équipements de contrôle-commande E1, E2, E3 de la machine M1 ciblée mais peuvent être également partiellement ou totalement localisés et exécutés sur un terminal mobile disposant d'une connectivité IP, par exemple un téléphone intelligent ou une tablette ou distribués sur des serveurs locaux ou distants.

Quel que soit l'emplacement des différents modules logiciels, le procédé de l'invention pourra être mis en oeuvre intégralement à partir d'une application dédiée, par exemple exécutée sur le terminal mobile de l'utilisateur.

Selon l'invention, lesdits modules logiciels évoqués ci-dessus sont les suivants :
- un module de gestion des serveurs 10.

Ce module 10 est destiné à gérer tous les serveurs mémorisant les ressources WEB associés aux équipements de contrôle-commande de la machine M1. Ce module 10 comporte notamment un module de détection automatique des nouveaux serveurs installés en liaison avec les équipements de contrôle-commande E1, E2, E3 de la machine M1. Il met à jour la liste des serveurs associés à une machine dans une base de données DB2. Il permet également l'ajout manuel de serveurs non détectés automatiquement, que ces serveurs soient locaux ou distants, par exemple un serveur WEB gérant la documentation liée aux équipements de contrôle-commande de la machine, un serveur de type GMAO (pour Gestion de Maintenance Assistée par Ordinateur) exposant des ressources web. Par ailleurs, ce module 10 peut être amené à gérer les droits d'accès (identifiant et mot de passe ou clé d'accès) à certaines ressources WEB. En effet, l'accès à certaines ressources WEB privées peut nécessiter un droit spécifique. Dans cette situation, le module complète la base de données DB2 de gestion des droits d'accès en mémorisant, en conformité avec les besoins de sécurisation nécessaires, les droits d'accès (par exemple identifiant et mot de passe) aux ressources WEB privées nécessaires au recensement de ces ressources et donc à leur indexation. Pour chaque ressource indexée, il sera également possible de préciser si celle-ci est publique ou privée et éventuellement de définir le profil nécessaire pour accéder à la ressource (manager, fabricant, maintenance...).
- Un module d'indexation 11.

Ce module est destiné à indexer les ressources WEB mémorisées dans les équipements de contrôle-commande de la machine et éventuellement dans les serveurs WEB qui ont été ajoutés grâce au module de gestion décrit ci-dessus. Le module d'indexation 11 sera donc en liaison avec le module 10 de gestion des serveurs pour indexer les ressources associées à chaque nouveau serveur ajouté pour un équipement. Le module d'indexation 11 est exécuté pour maintenir à jour une base d'indexation DB1 dans laquelle sont indexées toutes les ressources attribuées à chaque équipement E1, E2, E3 de la machine M1, en correspondance avec un ou plusieurs éléments d'identification de la machine et de chacun de ces équipements. Sur la figure 1, les ressources R1, R2 et R3 indexées dans la base de données DB1 sont notées respectivement R1_index, R2_index, R3_index. La base d'indexation DB1 est mise à jour pour chaque ressource WEB supprimée, ajoutée ou modifiée sur un serveur et peut disposer d'informations complémentaires comme la date de première indexation, les droits d'accès associés. Lorsqu'une nouvelle ressource est ajoutée ou mise à jour pour un équipement de contrôle-commande E de la machine M, celle-ci sera automatiquement indexée par le module d'indexation 11 si celui-ci s'exécute en permanence en tache de fond ou sera uniquement indexée lors du lancement du module d'indexation si la connexion est temporaire. Pour indexer une ressource WEB R, le module d'indexation 11 utilisera différents mécanismes de recensement des ressources WEB :
- Mise en oeuvre d'un parcours automatique des pages à partir d'une ou plusieurs pages,
- Exploitation d'un fichier, par exemple de type XML, mis à jour par le serveur. Ce fichier indique le plan d'accès aux ressources mémorisées sur ledit serveur interrogé.

Les ressources WEB de type privées ne sont indexées par le module d'indexation 11 que si les droits d'accès sont disponibles dans la base de données DB2. Si la ressource est privée, le profil d'accès nécessaire sera précisé. En revanche, la sécurité d'accès à cette ressource reste de la responsabilité du serveur qui la détient.

Le module d'indexation sera en mesure d'indexer tous types d'informations, notamment les éléments d'identification de la machine M1, ou de chacun de ses équipements, tels que par exemple des références commerciales, des images contenues dans les pages web ou dans les ressources de ces pages (comme par exemple dans un fichier pdf), des coordonnées géographiques.
- Un module de recherche 12.

Ce module de recherche 12 est exécuté, sur la base d'une requête émise par un utilisateur depuis son terminal.

La requête traitée par le module de recherche sur une machine M1 ou sur un ou plusieurs équipements E1, E2, E3 de celle-ci pourra être générée sur la base d'un élément d'identification de la machine ou d'un équipement de celle-ci, ledit élément d'identification pouvant être obtenu :
- Par capture d'une image photo et/ou vidéo de la machine ou de l'un de ses équipements et reconnaissance de ladite image dans la base d'indexation DB1,
- Par lecture d'un identifiant ou d'une référence saisi par l'utilisateur dans un champ spécifique ou obtenu en scannant un code matriciel, par exemple un QR code apposé sur la machine ou l'un de ses équipements, et en comparant ledit identifiant ou la référence avec des informations mémorisés dans la base d'indexation DB1,
- Par identification de la machine et du composant à l'aide d'une application de reconnaissance d'image,
- Par détermination des coordonnées géographiques du terminal mobile employé par l'utilisateur et comparaison avec les coordonnées stockées dans la base de données d'indexation DB1,
- Par une combinaison d'une ou plusieurs des solutions définies ci-dessus.

La requête est par exemple générée automatiquement sur la base de l'élément d'identification. Elle peut être complétée par des informations saisies par l'utilisateur ou par exemple contenues de manière intrinsèque dans le code matriciel scanné par l'utilisateur ou capturées dans une image photo ou vidéo. Par exemple, l'identification de la machine ou de l'un de ses équipements par reconnaissance d'image permet de générer automatiquement une requête comportant la référence de la machine ou de l'équipement issue de la base de données d'indexation DB1 dans laquelle ont été indexées les images des machines et des équipements.

Cette requête pourra être complétée de tous types d'informations voulues par l'utilisateur, par exemple obtenues par saisie dans un champ texte approprié affiché sur l'écran du terminal mobile, par la capture d'une image d'un équipement ou d'une partie d'équipement ou par la lecture d'un code matriciel.

Une fois les ressources identifiées en réponse à la requête, ce module 12 liste les pages trouvées et peut les trier en fonction de leur niveau de pertinence.

Préférentiellement, l'architecture peut également comporter :
- Un module 13 de gestion des points d'intérêt en réalité augmentée.

Ce module 13 permet à un concepteur ou à un utilisateur de générer un point d'intérêt en réalité augmentée sur une image de la machine ou d'un équipement de contrôle-commande de la machine et de l'associer :
- A un accès prédéfini : Soit à une adresse pointant sur une ou plusieurs ressources WEB identifiées à la suite d'une requête. Cette association est par exemple réalisée en sélectionnant chaque adresse (de type URL) à associer au point d'intérêt,
- Un accès défini dynamiquement : Soit à une requête de recherche formulée par le concepteur ou l'utilisateur. Ladite requête est alors exécutée à chaque sélection du point d'intérêt par l'utilisateur et proposera à l'utilisateur les informations les plus pertinentes et récentes, y compris des informations non disponibles ou existantes lors de la définition du point d'intérêt.

A partir de ces différents modules, un mode de fonctionnement possible est comme suit :
- Un utilisateur lance l'application dédiée sur son terminal pour obtenir des informations sur une machine M1, un de ces composants ou sur le process en cours, L'utilisateur peut générer la requête comme décrit ci-dessus, par exemple :
   - En scannant un code matriciel apposé sur la machine, ou
   - En prenant une photo de la machine ou d'un composant de la machine,
   - Via une application de réalité augmentée qui identifie automatiquement la machine et optionnellement un composant de celle-ci,
- L'utilisateur peut compléter la requête générée automatiquement par une saisie de mots clés sur son terminal à destination de la machine pour obtenir les informations voulues.
- Le module de recherche 12 exécute la requête dans la base d'indexation en scrutant les ressources WEB indexées pour ladite machine et ledit composant.
- Le module de recherche 12 construit une liste de résultats et classe éventuellement les résultats par niveau de pertinence.
- L'utilisateur peut alors sélectionner un ou plusieurs résultats et accéder à la ressource WEB correspondante stockée sur l'un des serveurs associés à ladite machine.

Selon l'invention, il faut comprendre que les bases de données DB1 et DB2 ne sont pas forcément liées à une seule machine. Elles peuvent comporter les informations liées à différentes machines, par exemple M2 et M3 représentées sur la figure 1. Le procédé décrit ci-dessus sera tout de même identique pour identifier les ressources associées à chacune de ces machines.

De même, pour clarifier la description ci-dessus, les deux bases de données DB1 et DB2 ont été séparées mais il faut comprendre que l'invention pourrait tout à fait être mise en oeuvre à l'aide d'une seule base de données fusionnant toutes les informations nécessaires.

## Revendications

1. Procédé de gestion des ressources WEB (R1, R2, R3) mémorisées dans un ou plusieurs serveurs (S1, S2, S3) informatiques associés à une machine (M1), **caractérisé en ce qu'**il comporte les étapes suivantes :
- mise à jour d'une liste desdits serveurs associés à ladite machine dans une base de données (DB2),
- indexation des ressources WEB mémorisées dans lesdits serveurs associés à la machine dans une base d'indexation (DB1),
- génération d'une requête pour accéder à des ressources WEB de ladite machine ou d'un composant de ladite machine (M1), ladite requête comportant au moins un élément d'identification de la machine (M1) ou dudit composant,
- émission de ladite requête à destination de ladite base d'indexation (DB1),
- sélection dans la base d'indexation (DB1) d'une ou plusieurs ressources WEB répondant à la requête émise.

2. Procédé selon la revendication 1, **caractérisé en ce que** l'élément d'identification est codé dans un code matriciel.

3. Procédé selon la revendication 1, **caractérisé en ce que** l'élément d'identification est une image capturée de la machine ou de son composant.

4. Procédé selon la revendication 2 ou 3, **caractérisé en ce que** la requête est générée automatiquement à partir de l'élément d'identification.

5. Procédé selon la revendication 4, **caractérisé en ce que** la requête est complétée par une saisie d'informations.

6. Système de gestion des ressources WEB (R1, R2, R3) mémorisées dans un ou plusieurs serveurs (S1, S2, S3) informatiques associés à une machine (M1), **caractérisé en ce qu'**il comporte :
- un module (10) de gestion des serveurs associés à chaque composant de la machine, ledit module étant agencé pour détecter de manière automatique l'ajout d'un serveur et pour détecter l'ajout et la mise à jour d'une ressource WEB associée à un composant de la machine,
- un module d'indexation (11) des ressources WEB associées à chaque composant de la machine (M1) dans une base d'indexation (DB1)
- un module de recherche (12) agencé pour :
- générer une requête pour accéder à des ressources WEB de ladite machine ou d'un composant de ladite machine (M1) sur la base d'un élément d'identification de la machine ou d'un composant de celle-ci,
- émettre ladite requête à destination de ladite base d'indexation (DB1),
- sélectionner dans la base d'indexation (DB1) d'une ou plusieurs ressources WEB répondant à la requête émise.

7. Système selon la revendication 6, **caractérisé en ce que** l'élément d'identification est codé dans un code matriciel.

8. Système selon la revendication 6, **caractérisé en ce que** l'élément d'identification est une image capturée de la machine ou de son composant.

9. Système selon la revendication 7 ou 8, **caractérisé en ce que** le module de recherche est agencé pour générer la requête de manière automatique à partir de l'élément d'identification.

10. Système selon la revendication 9, **caractérisé en ce que** la requête est complétée par une saisie d'informations.

11. Système selon la revendication 6, **caractérisé en ce qu'**il comporte un module (13) de gestion des points d'intérêt en réalité augmentée sur une image de la machine ou d'un composant de la machine et agencée pour l'associer :
- soit à une adresse pointant sur une ou plusieurs ressources WEB identifiées à la suite d'une requête,
- soit à une requête de recherche formulée par l'utilisateur.
